(19) Europäisches Patentamt
European Patent Office
Office européen des brevets

(11) Veröffentlichungsnummer: **0 161 503**
**B1**

(12) # EUROPÄISCHE PATENTSCHRIFT

(45) Veröffentlichungstag der Patentschrift: **01.06.88**

(51) Int. Cl.⁴: **C 07 F 9/54**

(21) Anmeldenummer: **85104500.5**

(22) Anmeldetag: **13.04.85**

(54) **Bis-Phosphoniumsalze und Verfahren zu ihrer Herstellung.**

(30) Priorität: **21.04.84 DE 3415037**

(43) Veröffentlichungstag der Anmeldung: **21.11.85 Patentblatt 85/47**

(45) Bekanntmachung des Hinweises auf die Patenterteilung: **01.06.88 Patentblatt 88/22**

(84) Benannte Vertragsstaaten: **CH DE FR GB LI**

(56) Entgegenhaltungen:
**EP - A - 0 105 843**

**HOUBEN-WEYL: "Methoden der organischen Chemie, 4. Auflage, Band XII, Teil I, Organische Phosphorverbindungen, 1963, Seiten 85-86, Thieme, Stuttgart, DE;**
**CHEMICAL ABSTRACTS, Band 101, 1984, Seite 655, Nr. 91075w, Columbus, Ohio, US; G.A. BOWMAKER u.a.: "One- and two-electron oxidation of phosphorus ylides with copper(II) salts"**
**Patent Abstracts of Japan, no. 57-96034**

(73) Patentinhaber: **HOECHST AKTIENGESELLSCHAFT, Postfach 80 03 20, D-6230 Frankfurt am Main 80 (DE)**

(72) Erfinder: **Schmidbauer, Hubert, Prof. Dr., Königsberger Strasse 36, D-8046 Garching (DE)**
Erfinder: **Dörzbach, Cornelia, Franz-Josef-Strasse 29, D-8000 München 40 (DE)**
Erfinder: **Bowmaker, Graham, Prof. Dr., University of Auckland Department of Chemistry, Auckland (NZ)**

**EP 0 161 503 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von Bis-Phosphoniumsalzen der allgemeinen Formel

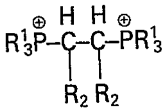 $2\,X^{\ominus}$

worin

$R^1$ ein geradkettiges oder verzweigtes Alkylradikal mit 1–12 C-Atomen, Cycloalkyl mit 5–8 C-Atomen oder ein substituiertes oder unsubstituiertes Phenyl,

$R^2$ ein Wasserstoffradikal, Methyl, Ethyl, n-Propyl oder i-Propyl und

$X^{\ominus}$ ein einwertiges, ggf. komplexes, Anion, oder $2\,X^{\ominus}$ ein zweiwertiges anorganisches Anion bedeuten, wobei jedoch $R^1$ kein Cycloalkyl oder Phenyl ist, wenn $R^2$ kein Wasserstoffradial ist, welches dadurch gekennzeichnet ist, dass man ein Triorganylphosphoniumalkylid der allgemeinen Formel

$$R^1_3P = CHR^2$$

mit wasserfreiem Cu(II)-halogenid in einem Lösungsmittel bei Temperaturen von –78 °C bis 0 °C unter Rühren umsetzt, das ausfallende Bis-Phosphoniumdihalogencuprat(I) abtrennt und ggf. durch doppelte Umsetzung in ein anderes Bisphosphoniumsalz überführt.

Vorzugsweise bedeuten $R^1$ Methyl, Ethyl, n-Propyl, i-Propyl oder Butyl und $X^{\ominus}$ Halogenid, Dihalogencuprat(I) ($CuHal_2^{\ominus}$), Tetraphenylborat [$(C_6H_5)_4B^{\ominus}$], Tetrafluoroborat ($BF_4^{\ominus}$) oder Hexafluorophosphat ($PF_6^{\ominus}$), oder s $X^{\ominus}$ Sulfat.

Die Bis-Phosphoniumsalze sind zumindest ihrem Typ nach aus EP-A-105843, besonders Seite 6, Formel III, bekannt.

Im einzelnen kann man das Verfahren der Erfindung so durchführen, dass man

a) zu einer Suspension von wasserfreiem Cu(II)-halogenid in einem Ether eine Lösung des Triorganylphosphoniumalkyds in einem Ether im Molverhältnis Alkylid zu $CuHal_2$ von höchstens 1 bei Temperaturen von −78 °C bis 0 °C, vorzugsweise −70 bis −60 °C, unter starkem Rühren langsam zutropft, das Reaktionsgemisch sich unter fortgesetztem Rühren auf Raumtemperatur erwärmen lässt und mehrere Stunden weiterrührt, das ausfallende Bis-Phosphoniumdihalogencuprat(I) abfiltriert, mit Wasser wäscht und ggf. durch doppelte Umsetzung in ein anderes Bis-Phosphoniumsalz überführt;

b) als Ether Tetrahydrofuran, Dioxane oder Ethylenglykolether einsetzt;

c) zur Herstellung von Bis-Phosphonium-hexafluorophosphat das ausfallende Bis-Phosphonium-dihalogencuprat(I) abfiltriert, mit Wasser wäscht, in konzentrierter Salzsäure löst, unter Eiskühlung mit einer wässrigen Lösung von Alkali- oder Ammoniumhexafluorophosphat versetzt und das ausfallende Bis-Phosphonium-hexafluorophosphat abfiltriert und mit Salzsäure und Wasser wäscht;

d) zur Herstellung von Bis-Phosphonium-hexafluorophosphat das ausfallende Bis-Phosphonium-dihalogencuprat(I) abfiltriert, mit Wasser wäscht, in Acetonitril löst, ggf. mit Wasserstoffperoxid versetzt, unter Zutritt von Luft rührt, das ausfallende Bis-Phosphonium-halogencuprat(II) abfiltriert, in Wasser unter Zusatz von Salzsäure löst, unter Eiskühlung mit einer wässrigen Lösung von Alkali- oder Ammoniumhexafluorophosphat versetzt und das anfallende Bis-Phosphonium-hexafluorophosphat abtrennt und mit Salzsäure und Wasser wäscht.

Die erfindungsgemässen Umsetzungen verlaufen dabei z.B. nach folgenden Gleichungen:

$$\text{(I)}\ 2\,R^1_3 = CH_2 + 2\,CuCl_2 \longrightarrow$$

$$R^1_3P^{\oplus} - CH_2 - CH_2 - {}^{\oplus}PR^1_3\ 2\,CuCl_2^{\ominus}\ 2\,PF_6^{\ominus} \longrightarrow$$

$$R^1_3P^{\oplus} - CH_2 - CH_2 - {}^{\oplus}PR^1_3\ 2\,PF_6^{\ominus}$$

$$\text{(II)}\ 2\,R^1_3P = CHR^2 + 2\,CuCl_2 \longrightarrow$$

$$R^1_3P^{\oplus} - CHR^2 - CHR^2 - {}^{\oplus}PR^1_3\ 2\,CuCl_2^{\ominus}$$

$$\underrightarrow{2\,PF_6^{\ominus}}\ R^1_3P^{\ominus} - CHR^2 - CHR^2 - {}^{\oplus}PR^1_3\ 2\,PF_6^{\ominus}$$

Ausgangsverbindungen für das neue Verfahren sind Ylide, die nach bekannten Methoden in hoher Ausbeute herstellbar und leicht in salzfreier Form isolierbar sind [H. Schmidbaur, Inorg. Synth. 18, 135–143 (1978); H. Schmidbaur und W. Tronich, Chem. Ber. 101, 595–603 (1968); R. Köster et al., Liebigs Ann. Chem. 739, 211–219 (1970); H. Schmidbaur et al., Chem. Ber. 105, 1084–1086 (1972)]. Ihre vorzügliche Löslichkeit in organischen Lösungsmitteln erlaubt ihre weitere Umsetzung unter sehr schonenden Bedingungen. Als Lösungsmittel kommen solche mit Ether-Funktionen in Betracht, z.B. Dioxane oder Glycolether. Ein bevorzugtes Lösungsmittel ist Tetrahydrofuran. Das gelöste Ylid wird bei Temperaturen von −78 °C bis 0 °C, vorzugsweise bei −60 bis −70 °C mit wasserfreiem Cu(II)-Halogenid vereinigt, wobei das Molverhältnis Ylid:$CuHal_2$ $\leq 1$ beträgt. Überschüssiges $CuHal_2$ stört nicht, da es aus dem unlöslichen Reaktionsprodukt mit Wasser extrahierbar ist. Die in guter Ausbeute anfallenden Primärprodukte – Bis-Phosphoniumsalze mit 2 Äquivalenten $Cu(I)Hal_2^{\ominus}$ als Gegenion – können in an sich bekannter Weise an ihrem anionischen Teil ausgetauscht werden; so gelingt die Isolierung der Bis-Phosphoniumsalze als Hexafluorophosphate durch doppelte Umsetzung der Dichlorcuprate (I) mit äquivalenten Mengen $NH_4[PF_6]$, wobei u.U. zuvor das $Cu^+$ mittels $H_2O_2$ und/oder Luft in Acetonitril als Lösungsmittel zum $Cu^{2+}$ oxidiert werden muss. In die isolierbaren Bis(Phosphonium-Hexafluorophosphate) lassen sich über Metathesereaktionen beliebige andere Anionen einführen.

Bei Einsatz von Methyliden ($R^1_3P = CH_2$) werden nach dem hier beschriebenen Verfahren ethylenverbrückte Bis-Phosphoniumverbindungen erhalten. Wenn ein H-Radikal der Methylid-Gruppe durch einen Alkyl-Rest, beispielsweise $CH_3$ ersetzt wird ($R^1_3P = CHCH_3$), sind isomere Verbindungen zu erwarten (RR/SS-Enantiomerenpaar; RS-meso-Form). Überraschenderweise wurde gefunden, dass die Diastereomere nicht im erwarteten statistischen Verhältnis (50% RR/SS, 50% RS) anfallen, sondern dass die beiden optischen Antipoden in erheblichem Überschuss (Molverhältnis 2,8:1) gebildet werden. Der Nachweis dieser ungewöhnlichen Produktverteilung kann zweifelsfrei anhand des $\{^1H\}$ $^{13}$-C-NMR-Spektrums der Verbindung

$$(C_2H_5)_3P^{\oplus} - CHCH_3 - CHCH_3 - P^{\oplus} (C_2H_5)_3\ 2\ PF_6^{\ominus}$$

geführt werden. Prinzipiell ist es möglich, das Gemisch nach bekannten Methoden in Stereoisomere aufzutrennen, so dass auf diese Weise optisch aktive Bis-Phosphoniumsalze zugänglich sind, die – z.B. als Phasentransfer-Katalysator eingesetzt – eine asymmetrische Induktion der von ihnen katalysierten Reaktion bewirken können.

Beispiel 1

Ethylen-1,2-bis(trimethylphosphonium-hexafluorophosphat)

Zu einer Suspension von 1,1 g $CuCl_2$ (8,18 mmol) in 20 $cm^3$ Tetrahydrofuran werden innerhalb von 1 h bei einer Temperatur von −60 bis −70 °C (Ethanol-Trockeneis-Kühlung) unter intensivem Rühren 0,70 g $(CH_3)_3P{=}CH_2$ (7,77 mmol) in 10 $cm^3$ Tetrahydrofuran zugetropft. Nach beendeter Ylidzugabe lässt man das Reaktionsgemisch langsam auf Raumtemperatur kommen und rührt noch weitere 2 h. Der entstandene ockerfarbene Feststoff wird in 30 $cm^3$ $H_2O$ aufgeschlämmt und so lange gerührt, bis er farblos erscheint. Dieser farblose Niederschlag wird abfiltriert, in 10 bis 20 $cm^3$ konz. HCl gelöst und mit 1,27 g $NH_4PF_6$ (7,79 mmol), gelöst in 20 $cm^3$ $H_2O$, unter Eiskühlung versetzt. Das Produkt wird abfiltriert, mehrmals mit HCl und Wasser gewaschen und aus Wasser umkristallisiert. Farbloser, luftstabiler Feststoff, Fp.: 286 °C, Ausbeute: 0,68 g (37,2% d.Th.).

$C_8H_{22}F_{12}P_4$ (470,16)
ber.: C 20,44, H 4,72
gef.: C 20,83, H 4,74

Die Struktur dieser Verbindung wurde durch NMR-Spektren bestätigt.

Beispiel 2

Ethylen-1,2-bis(triethylphosphonium-hexafluorophosphat)

Zu einer Suspension von 3,35 g $CuCl_2$ (24,9 mmol) in 60 $cm^3$ Tetrahydrofuran werden unter den in Beispiel 1 beschriebenen Bedingungen 2,58 g $(C_2H_5)_3P{=}CH_2$ (19,5 mmol) in 30 $cm^3$ Tetrahydrofuran langsam zugetropft. Man erwärmt wieder auf Raumtemperatur und rührt noch weitere 2 h. Der entstandene hellgrüne Feststoff wird gründlich mit Wasser gewaschen, bis er farblos erscheint. Der farblose Niederschlag wird abfiltriert, in 50 $cm^3$ $CH_3CN$ gelöst, mit 1 ml $H_2O_2$ versetzt und 12 h an der Luft gerührt. Aus der Lösung fällt grünes Chlorocuprat(II) der Formel $[(C_6H_5)_3P{-}CH_2CH_2{-}P(C_6J_5)_3]^{2\oplus}\ 2[Cu(OH)Cl_2]^{\ominus}$ oder $[CuCl_4]^{2\ominus}$ aus. Dieses wird abfiltriert, in $H_2O$ unter Zusatz einiger Tropfen HCl gelöst und mit 2,0 g $NH_4PF_6$ (12,3 mmol), gelöst in 10 $cm^3$ Wasser, unter Eiskühlung versetzt. Das entstandene farblose Salz wird mit Wasser und wenig HCl gewaschen und aus Wasser umkristallisiert. Farbloser, luftstabiler Feststoff, Fp.: 210 °C, Ausbeute: 1,63 g (30,2% d.Th.).

$C_{14}H_{34}F_{12}P_4$ (554,32)
ber.: C 30,34, H 6,18
gef.: C 30,93, H 6,17

Die Struktur dieser Verbindung wurde durch NMR-Spektren bestätigt.

Beispiel 3

Ethylen-1,2-bis(triphenylphosphonium-hexafluorophosphat)

Die Umsetzung erfolgt unter den Bedingungen des Beispiels 1 mit 0,85 g $CuCl_2$ (6,3 mmol) in 20 $cm^3$ Tetrahydrofuran und 1,28 g $(C_6H_5)_3P{=}CH_2$ (4,6 mmol) in 10 $cm^3$ Tetrahydrofuran. Nach zweistündigem Rühren bei Raumtemperatur erhält man ein gelb gefärbtes Produkt, das in 10 $cm^3$ konz. HCl und 20 $cm^3$ Wasser gelöst und unter Eiskühlung mit 0,75 g $NH_4PF_6$ (4,6 mmol) in 10 $cm^3$ $H_2O$ versetzt wird. Das entstandene farblose Salz wird abfiltriert, mit HCl und $H_2O$ gewaschen und im Vakuum bei 100 °C getrocknet; farbloser, luftstabiler Feststoff, Fp.: 208–215 °C, Ausbeute: 1,31 g (67,6% d.Th.).

$C_{38}H_{34}F_{12}P_4$ (842,58)
ber.: C 54,17, H 4,07
gef.: C 54,40, H 4,30

Die Struktur dieser Verbindung wurde durch NMR-Spektren bestätigt.

Beispiel 4

1,2-Dimethyl-ethylen-1,2-bis(triethylphosphonium-hexafluorophosphat

2,3 g $CuCl_2$ (17,1 mmol) in 40 $cm^3$ Tetrahydrofuran werden unter den Bedingungen des Beispiels 1 mit 2,5 g $(C_2H_5)_3P{=}CHCH_3$ (17,1 mmol) in 20 $cm^3$ Tetrahydrofuran umgesetzt. Das entstandene farblose Produkt wird abgefrittet, mit Tetrahydrofuran gewaschen, in 15 $cm^3$ $CH_3CN$ gelöst, und die Lösung an der Luft 24 h gerührt. Durch Verdampfung entstehende Verluste an $CH_3CN$ werden ersetzt. Der entstandene grüne Feststoff wird abfiltriert, mit $CH_3CN$ gewaschen und in 10 $cm^3$ $H_2O$, versetzt mit einigen Tropfen konz. HCl, gelöst. Unter Eiskühlung wird eine Lösung von 1,5 g $NH_4PF_6$ (9,2 mmol) in 2 $cm^3$ Wasser zugegeben. Es bildet sich ein viskoses Produkt, das sich nach Abdekantieren der überstehenden Flüssigkeit und Waschen mit Wasser kristallin erhalten lässt. Farbloser, luftstabiler Feststoff, Fp.: 102 °C, Ausbeute: 1,61 g (32,3% d.Th.).

$C_{16}H_{38}F_{12}P_4$ (582,37)
ber.: C 33,00, H 6,58
gef.: C 32,21, H 6,47

Die Struktur dieser Verbindung wurde durch NMR-Spektren bestätigt, welche darüber hinaus zeigen, dass der erhaltene Feststoff aus optischen Antipoden des Typs RR/SS einerseits und RS-Mesoform andererseits im Molverhältnis von 2,8:1 besteht.

**Patentansprüche**

1. Verfahren zur Herstellung von Bis-Phosphoniumsalzen der allgemeinen Formel

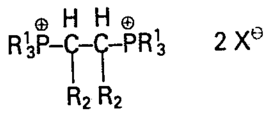

worin $R^1$ ein geradkettiges oder verzweigtes Alkylradikal mit 1–12 C-Atomen , Cycloalkyl mit 5–8 C-Atomen oder ein substituiertes oder unsubstituiertes Phenyl,

$R^2$ ein Wasserstoffradikal, Methyl, Ethyl, n-Propyl oder i-Propyl, und

$X^{\ominus}$ ein einwertiges, ggf. komplexes, Anion, oder

2 $X^{\ominus}$ ein zweiwertiges anorganisches Anion bedeuten,

wobei jedoch $R^1$ kein Cycloalkyl oder Phenyl ist, wenn $R^2$ kein Wasserstoffradikal ist, dadurch gekennzeichnet, dass man ein Triorganylphosphoniumalkylid der allgemeinen Formel

$$R^1_3P = CHR^2$$

mit wasserfreiem Cu(II)-halogenid in einem Lösungsmittel bei Temperaturen von −78 °C bis 0 °C unter Rühren umsetzt, das ausfallende Bis-Phosphonium-dihalogencuprat(I) abtrennt und ggf. durch doppelte Umsetzung in ein anderes Bisphosphoniumsalz überführt.

2. Verfahren nach Anspruch 1, dadurch gekennzeichnet, dass in der allgemeinen Formel der Bis-Phosphoniumsalze

$R^1$ Methyl, Ethyl, n-Propyl, i-Propyl oder Butyl,

$X^{\ominus}$ Halogenid, Dihalogencuprat(I), Tetraphenylborat, Tetrafluoroborat oder Hexafluorophosphat, oder

2 $X^{\ominus}$ Sulfat bedeuten.

3. Verfahren nach Anspruch 1 oder 2, dadurch gekennzeichnet, dass man zu einer Suspension von wasserfreiem Cu(II)-halogenid in einem Ether eine Lösung des Triorganylphosphoniumalkyds in einem Ether im Molverhältnis Alkylid zu $CuHal_2$ von höchstens 1 bei Temperaturen von −78 °C bis 0 °C, vorzugsweise −70 bis −60 °C, unter starkem Rühren langsam zutropft, das Reaktionsgemisch sich unter fortgesetztem Rühren auf Raumtemperatur erwärmen lässt und mehrere Stunden weiterrührt, das ausfallende Bis-Phosphonium-dihalogencuprat(I) abfiltriert, mit Wasser wäscht und ggf. durch doppelte Umsetzung in ein anderes Bis-Phosphoniumsalz überführt.

4. Verfahren nach Anspruch 3, dadurch gekennzeichnet, dass man als Ether Tetrahydrofuran, Dioxane oder Ethylenglykolether einsetzt.

5. Verfahren nach einem der Ansprüche 1–4, dadurch gekennzeichnet, dass man zur Herstellung von Bis-Phosphoniumhexafluorophosphat das ausfallende Bis-Phosphonium-di-halogencuprat(I) abfiltriert, mit Wasser wäscht, in konzentrierter Salzsäure löst, unter Eiskühlung mit einer wässrigen Lösung von Alkali- oder Ammoniumhexafluorophosphat versetzt und das ausfallende Bis-Phosphoniumhexafluorophosphat abfiltriert und mit Salzsäure und Wasser wäscht.

6. Verfahren nach einem der Ansprüche 1–4, dadurch gekennzeichnet, dass man zur Herstellung von Bis-Phosphoniumhexafluorophosphat das ausfallende Bis-Phosphonium-dihalogencuprat(I) abfiltriert, mit Wasser wäscht, in Acetonitril löst, ggf. mit Wasserstoffperoxid versetzt, unter Zutritt von Luft rührt, das ausfallende Bis-Phosphonium-halogencuprat(II) abfiltriert, in Wasser unter Zusatz von Salzsäure löst, unter Eiskühlung mit einer wässrigen Lösung von Alkali- oder Ammoniumhexafluorophosphat versetzt und das anfallende Bis-Phosphonium-hexafluorophosphat abtrennt und mit Salzsäure und Wasser wäscht.

**Claims**

1. Process for making bis-phosphonium salts of the general formula

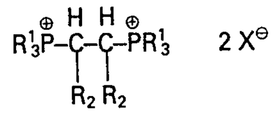

in which

$R^1$ is a straight or branched alkyl group having 1–12 carbon atoms, a cycloalkyl having 5–8 carbon atoms, or a substituted or unsubstituted phenyl,

$R^2$ is a hydrogen radical, methyl, ethyl, n-propyl, oder iso-propyl, and

$X^{\ominus}$ is a monovalent, optionally complex anion, or

$2X^{\ominus}$ is a bivalent inorganic anion,

$R^1$ standing for a group other than a cycloalkyl or phenyl group in the event of $R^2$ standing for a group other than a hydrogen radical,

which comprises: reacting a triorganylphosphonium alkylide of the general formula $R^1_3P{=}CHR^2$ with an anhydrous copper(II)halide in a solvent at temperatures of −78 to 0 °C with agitation, separating precipitated bis-phosphonium dihalogenocuprate(I), and converting in by double reaction, if desired, into another bis-phosphonium salt.

2. Process as claimed in claim 1, wherein, in the general formula indicated for the bis-phosphonium salts,

$R^1$ stands for methyl, ethyl, n-propyl, iso-propyl or butyl,

$X^{\ominus}$ stands for a halide, dihalogenocuprate(I), tetraphenylborate, tetrafluoroborate or hexafluorophosphate, or

2 $X^{\ominus}$ stands for a sulfate.

3. Process as claimed in claim 1 or 2, wherein a solution of the triorganylphosphonium alkylide in an ether in a molar ratio of alkylide to $CuHal_2$ of at most 1 is slowly added dropwise with intense agitation at temperatures of −78–0 °C preferably, −70 to −60 °C, to a suspension of an anhydrous Cu-(II)-halide in an ether, the reaction mixture is allowed to assume room temperature while agitation is continued over a period of several hours, precipitated bis-phosphonium-dihalogenocuprate(I) is filtered off, washed with water, and converted by double reaction, if desired, into another bis-phosphonium salt.

4. Process as claimed in claim 3, wherein the ether used is tetrahydrofurane, a dioxane or ethyleneglycol ether.

5. Process as claimed in any of claims 1–4, wherein bis-phosphonium-hexafluorophosphate is made by filtering off precipitated bis-phosphonium-dihalogenocuprate(I), washing it with water, dissolving it in concentrated hydrochloric acid, admixing it, while cooling with ice, with an aqueous solution of an alkali metal or ammoniumhexafluorophosphate, filtering off precipitated bis-phosphoniumhexafluorophosphate and washing it with hydrochloric acid and water.

6. Process as claimed in any of claims 1–4, wherein bis-phosphonium-hexafluorophosphate is made by filtering off precipitated bis-phosphonium-dihalogenocuprate(I), washing it with water, dissolving it in acetonitrile, admixing it with hydrogen peroxide, if desired, stirring it with admission of air, filtering off precipitated bis-phosphonium-halogenocuprate(II), dissolving it in water while adding hydrochloric acid, admixing it, while cooling with ice, with an aqueous solution of an alkali metal or ammoniumhexafluorophosphate, separating the resulting bis-phosphonium-hexafluorophosphate and washing it with water and hydrochloric acid.

## Revendications

1. Procédé de préparation de sels de bis-phosphonium de formule générale

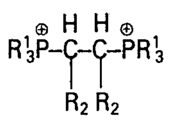 2 $X^{\ominus}$

dans laquelle

$R^1$ représente un radical alkyle à chaîne droite ou ramifiée en $C_1$–$C_{12}$, un cycloalkyle en $C_5$–$C_8$ ou un phényle substitué ou non substitué,

$R^2$ représente un radical hydrogène, méthyle, éthyle, n-propyle ou i-propyle, et

$X^{\ominus}$ représente un anion monovalent, éventuellement complexe, ou

2 $X^{\ominus}$ représente un anion inorganique bivalent, mais $R^1$ représente un groupe autre que cycloalkyle ou phényle si $R^2$ représente un radical autre que l'hydrogène, caractérisé en ce que l'on fait réagir un alkylure de triorganylphosphonium de formule générale

$$R^1_3P = CHR^2$$

avec un halogénure de Cu(II) and anhydre dans un solvant en agitant à des températures de −78 à 0 °C, on sépare le dihalogénocuprate (I) de bis-phosphonium qui précipite et on le transforme, éventuellement par réaction double, en un autre sel de bis-phosphonium.

2. Procédé selon la revendication 1, caractérisé en ce que, dans la formule générale des sels de bis-phosphonium, $R^1$ représente méthyle, éthyle, n-propyle, i-propyle ou butyle,

$X^{\ominus}$ représente un ion halogénure, dihalogénocuprate (I), tétraphénylborate, tétrafluoroborate ou hexafluorophosphate ou

2 $X^{\ominus}$ représente un ion sulfate.

3. Procédé selon la revendication 1 ou 2, caractérisé en ce que l'on ajoute lentement, goutte à goutte et avec agitation énergique, à une suspension d'un halogénure de Cu(II) anhydre dans un éther, une solution de l'alkylure de triorganylphosphonium dans un éther dans un rapport molaire alkylure/$CuHal_2$ de 1 au plus et à des températures de −78 à 0 °C, de préférence −70 à −60 °C, on laisse le mélange réactionnel se réchauffer à la température ambiante avec agitation en continu et on poursuit l'agitation pendant plusieurs heures, on filtre de dihalogénocuprate (I) de bis-phosphonium qui précipite, on le lave à l'eau et on le transforme, éventuellement par réaction double, en un autre sel de bis-phosphonium.

4. Procédé selon la revendication 3, caractérisé en ce que l'on utilise comme éther le tétrahydrofurane, des dioxannes ou des éthers l'éthylèneglycols.

5. Procédé selon l'une des revendications 1 à 4, caractérisé en ce que, pour préparer l'hexafluorophosphate de bis-phosphonium, on filtre le dihalogénocuprate (I) de bis-phosphonium qui précipite, on le lave à l'eau, on le dissout dans l'acide chlorhydrique concentré, on y ajoute en refroidissant par la glace une solution aqueuse d'hexafluorophosphate alcalin ou d'ammonium et on filtre l'hexafluorophate de bis-phosphonium qui précipite et on le lave par l'acide chlorhydrique et par l'eau.

6. Procédé selon l'une des revendications 1 à 4, caractérisé en ce que, pour préparer l'hexafluorophosphat de bis-phosphonium, on filtre de dihalogénocuprate (I) de bis-phosphonium qui précipite, on le lave à l'eau, on le dissout dans l'acétonitrile, on l'additionne éventuellement l'eau oxygénée, on agite avec apport d'air, on filtre l'halogénocuprate (II) de bis-phosphonium qui précipite, on le dissout dans l'eau avec addition d'acide chlorhydrique, on y ajoute en refroidissant par la glace une solution aqueuse d'hexafluorophosphate alcalin ou d'ammonium et on sépare l'hexafluorophosphate de bis-phosphonium obtenue et on le lave par l'acide chlorhydrique et par l'eau.